# EUROPEAN PATENT APPLICATION

(11) **EP 3 929 477 A1**
(43) Date of publication of application: **29.12.2021**
(21) Application number: 19916095.3
(22) Date of filing: 24.12.2019
(51) Int. Cl.: F16K 31/04, F16K 39/02

(54) **FLOW CONTROL VALVE**

(30) Priority: 19.02.2019 JP 2019027012
(71) Applicant: Time Engineering Co., Ltd., Aichi 480-0125 (JP)
(72) Inventor: KONDO, Hiroshige, Niwa-gun, Aichi 480-0125 (JP)
(74) Representative: Office Freylinger
(86) International application number: PCT/JP2019/050589
(87) International publication number: WO 2020/170600

(57) **Abstract**

The present invention comprises: a valve casing (2) comprising a primary chamber (5) and a secondary chamber (6); a valve seat (14) provided inside the valve casing (2); a valve body (25) that can be seated on the valve seat (14); a needle (17) that is continuous with the valve body (25); a motor mechanism for moving the needle (17) along the axial direction of the needle (17) to switch between a closed state in which the valve body (25) is seated on the valve seat (14) and an open state in which the valve body (25) is withdrawn from the valve seat (14); a pressure-receiving chamber (26) provided on the upper surface of the valve body (25); and a conductive pathway, provided within the valve body (25), that is constituted by a first communicating groove (23) and a second communicating groove (24) that cause the secondary chamber (6) and the pressure-receiving chamber (26) to communicate. The diameter (PB) of the upper surface of the valve body (25) constituting the lower surface of the pressure-receiving chamber (26) is slightly larger than the diameter (PA) of the lower surface of the valve body (25) constituting the upper surface of the secondary chamber (6).

## Description

### Technical Field

The art disclosed in the present application relates to a flow control valve that adjusts a valve opening degree (opening area) using an electric drive device such as a motor to control the flow rate and pressure of various types of fluids such as gases and liquids.

### Background Art

A conventional flow control valve that adjusts a valve opening degree (opening area) using driving means such as a motor to control the flow rate and pressure of various types of fluids such as gases and liquids is disclosed, for example, in Patent Document 1.

Patent Document 1 discloses an electric valve including a valve housing in which a first opening and a second opening are formed; an annular valve seat part provided in communication with the second opening in the valve housing; a cylinder part provided in the valve housing so that its central axis is arranged on an axial line of a central axis of the valve seat part and so that one end thereof is opposite to the valve seat part with an interval; a valve member housed inside the cylinder part so as to be movable in a piston-like manner; a pressure balancing path provided to the valve housing or the valve member so as to cause a back pressure chamber on the other end side in the cylinder part formed by the space inside the cylinder part being divided by the valve member to communicate with the second opening; and a valve member moving means that moves the valve member to be seated on or unseat from the valve seat part, wherein an area in plan view of the inside of an annular tip part of the valve member is equal to an area in plan view of the back pressure chamber side of the valve member on the inside of the cylinder part.

### Citation List

### Patent Documents

Patent Document 1: Japanese Patent No. 6043152.

### Disclosure of the Invention

### Technical Problem

A problem present in flow control valves using driving means such as a motor is the driving torque needed to move the valve member up and down and the backlash that occurs during movement up and down. The electric valve disclosed in Patent Document 1 has a problem in that, although it is possible to reduce the driving torque by having the area in plan view of the inside of the annular tip part of the valve member be equal to the area in plan view of the back pressure chamber side of the valve member on the inside of the cylinder part, backlash cannot be reduced.

The art disclosed in the present application was proposed in view of the above problem, and has an object of providing a flow control valve capable of reducing the driving torque of the motor which is driving means, and controlling backlash that occurs during upward and downward movement of the valve member.

### Means for Solving the Problem

In order to achieve the above object, a flow control valve according to Claim 1 is a flow control valve including a valve casing having a primary chamber that is an inlet section and a secondary chamber that is an outlet section; a valve seat provided inside the valve casing; a valve body that can be seated on the valve seat; a plunger that is continuous with the valve body; a drive unit configured to move the plunger along an axial direction of the plunger to switch between a closed state in which the valve body is seated on the valve seat and an open state in which the valve body is withdrawn from the valve seat; a pressure-receiving chamber provided between an upper surface of the valve body and the drive unit; and a conductive pathway, provided along the axial direction of the plunger, that causes the secondary chamber and the pressure-receiving chamber to communicate,
wherein the upper surface of the valve body that constitutes a lower surface of the pressure-receiving chamber has an area that is bigger than an area of a lower surface of the valve body that constitutes an upper surface of the secondary chamber.

The flow control valve according to Claim 2 is the flow control valve according to Claim 1, wherein the valve body is composed of an upper valve body, an upper surface of which constitutes the lower surface of the pressure-receiving chamber; and a lower valve body, a lower surface of which constitutes the upper surface of the secondary chamber, the flow control valve further including a biasing member between the upper valve body and the lower valve body that biases the upper and lower valve bodies away from each other.

### Effects of the Invention

In the flow control valve according to Claim 1, the pressure-receiving chamber on the upper surface side of the valve body (valve member) and the secondary side are connected with a conductive pathway (pressure balancing path) and the area of the upper surface of the valve body is made slightly bigger than the area of the lower surface of the valve body, whereby the force applied in an axial direction of the valve body is balanced in a state in which a slight force is applied upwardly (in a valve opening direction). (This is a state in which the valve body is raised toward the upper surface side). This makes it possible to reduce backlash occurring when the valve body moves up or down. Further, by reducing the difference in area between the upper surface of the valve body and the lower surface of the valve body to a required degree for reducing backlash, the difference in pressure applied to the upper surface and the lower surface of the valve body can be reduced, making it possible to reduce the driving torque needed when the valve body is to move up or down. Thus, upward and downward movement of the valve body becomes smooth, and the motor used in the drive unit can be made smaller. This makes it possible to provide a flow control valve capable of efficient flow control at a low cost.

In the flow control valve according to Claim 2, the valve body is divided in the axial direction into an upper valve body and a lower valve body, and a biasing member is provided therebetween to bias the two parts away from each other, so that if the secondary chamber side experiences an abnormal increase in pressure due to water hammer or the like when the flow control valve is closed and the lower valve body is seated on the valve seat, the lower valve body will rise against the biasing force of the biasing member to open the valve, whereby pressure can escape into the primary side so that damage to the secondary side can be prevented. In addition, when the valve body is seated on the valve seat by the drive unit when the valve is closed, and an excessive force (in the closing direction) is further applied to the valve body, the biasing member acts as a buffer, making it possible to prevent damage to components that may occur when excessive force is applied to the valve body (for example, damage to gears within the drive unit due to jamming of the gears, etc.).

### Brief Description of the Drawings

Fig. 1 is a cross-sectional view of a flow control valve according to a first embodiment of the present invention when the valve is closed;
Fig. 2 is a bottom view of the flow control valve;
Fig. 3 is a cross-sectional view of the flow control valve when the valve is open;
Fig. 4 is a magnified cross-sectional view describing a pressure introduction path provided to a valve body;
Fig. 5 is a cross-sectional view describing a pressure relief mechanism at a time of rising pressure on a secondary side;
Fig. 6 is a drawing showing a side view and a bottom view of a needle constituting a valve mechanism;
Fig. 7 is a drawing showing a top view, a side view (transparent view), and a bottom view of a needle nut constituting the valve mechanism;
Fig. 8 is a drawing showing a top view, a side view (transparent view), and a bottom view of a cylinder guide constituting the valve mechanism;
Fig. 9 is a drawing showing a top view, a side view (transparent view), and a bottom view of a cylinder constituting the valve mechanism; and
Fig. 10 is a drawing showing a top view, a side view (transparent view), and a bottom view of a cap constituting the valve mechanism.

### Description of Embodiments

First, a flow control valve 1 of an embodiment according to the present invention will be described with reference to the drawings.

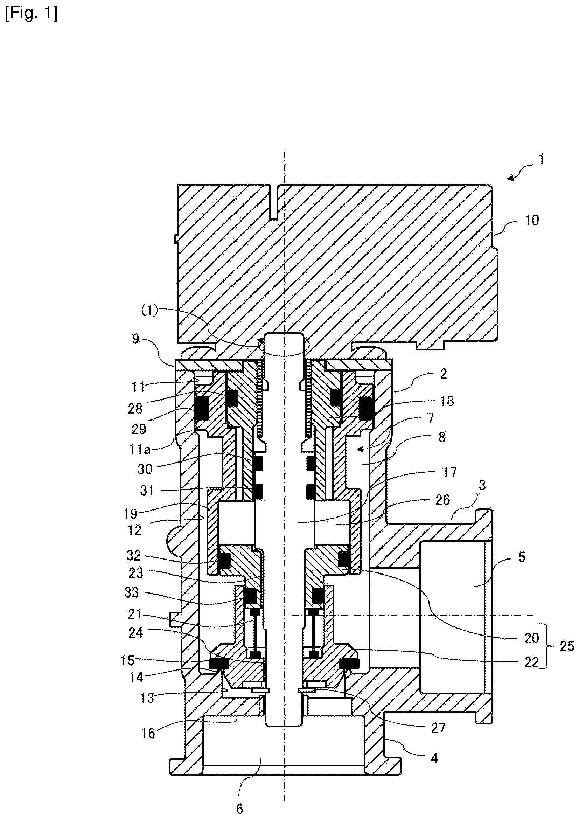

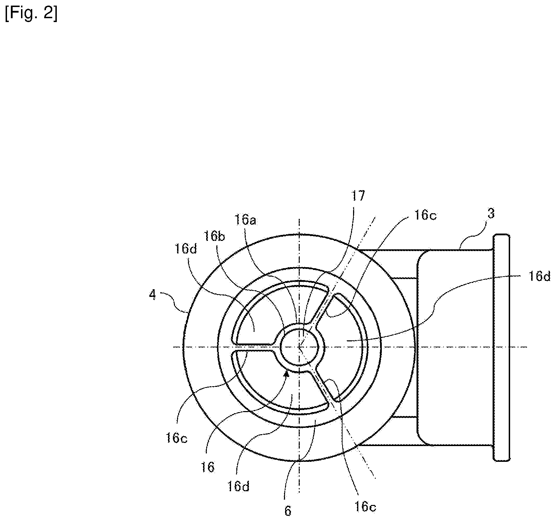

Fig. 1 is a cross-sectional view of the flow control valve 1 in a closed state, and Fig. 2 is a bottom view of the flow control valve 1 from below. The flow control valve 1 has a valve casing 2. At one side of the bottom part of the valve casing 2, a first connecting tube 3 protrudes in a lateral direction. On the lower side of the bottom part of the valve casing 2, a second connecting tube 4 protrudes in a downward direction perpendicular to a central axis of the first connecting tube 3. In an interior of the first connecting tube 3 there is formed a primary chamber 5 which constitutes an inlet side of a fluid. Meanwhile, in an interior of the second connecting tube 4 there is formed a secondary chamber 6 which constitutes an outlet side of the fluid.

The primary chamber 5 and the secondary chamber 6 are formed to gradually become narrower toward the interior. The interior of the valve casing 2 above the secondary chamber 6 is an opening of an approximately cylindrical shape and is provided with a valve chamber 8 that houses a valve mechanism 7 described below. An upper end portion of the valve chamber 8 is open, and at an upper end thereof, in other words above the valve casing 2, a motor mechanism 10 is attached to the upper surface of the valve casing 2 by a screw or the like (not shown) via an upper lid 9. The motor mechanism 10 is composed of a motor and drive unit not shown here, and drives a needle 17 described below to rotate. In the present embodiment, a stepper motor is employed as the motor, but the invention is not so limited, and a DC motor or a gear motor etc. may also be employed.

The valve chamber 8 is an opening composed of, formed continuously in order from above in the drawing, an upper opening 11 with a maximum diameter, a middle opening 12 with a diameter slightly smaller than that of the upper opening 11, and a lower opening 13 forming a lower end and having a diameter smaller than that of the middle opening 12, each of the openings being formed in a cylindrical shape. At a boundary between the upper opening 11 and the middle opening 12, there is provided an upper opening edge 11a. At a boundary between the middle opening 12 and the lower opening 13, a valve seat 14 is provided so as to protrude toward the middle opening 12. The valve seat 14 has an upper surface in the form of a circular arc, and is formed in an annular shape along an outer periphery of the lower opening 13. As described below, when the flow control valve 1 is closed, a seating packing 15 is seated on the valve seat 14.

Between the secondary chamber 6 and the lower opening 13 there is formed a needle support 16. As shown in Fig. 2 in which the flow control valve 1 is seen from below, The needle support 16 is composed of a center tube 16a having a through hole 16b at its center which a lower end of the needle 17 penetrates, and three ribs 16c, 16c, and 16c provided at approximately equal intervals extending radially from the center tube 16a toward an inner peripheral surface of an upper opening of the secondary chamber 6. Openings 16d, 16d, and 16d between the ribs 16c, 16c, and 16c are openings that provide communication between the valve chamber 8 (lower opening 13) with the secondary chamber 6.

Next, a valve mechanism 7 of the flow control valve 1 according to the present invention will be described with reference to the drawings.

The valve mechanism 7 is composed of the needle 17 which is rotated by the motor mechanism 10, a needle nut 18 provided with a female thread that engages a male thread of the needle 17, a cylinder guide 19 that secures the needle nut 18 to the valve casing 2, a cylinder 20 that is attached to a lower portion of the needle 17 and is able to slide up and down due to a sliding portion provided to a lower portion of the cylinder guide 19, and a cap 22 that is attached to the cylinder 20 via a spring 21. The needle nut 18, the cylinder 20, and the cap 22 are mounted so as to be penetrated by the needle 17. In addition, the spring 21 is a compression spring that biases the cap 22 downward relative to the cylinder 20.

Each of the components that constitute the valve mechanism 7 will be described in detail below.

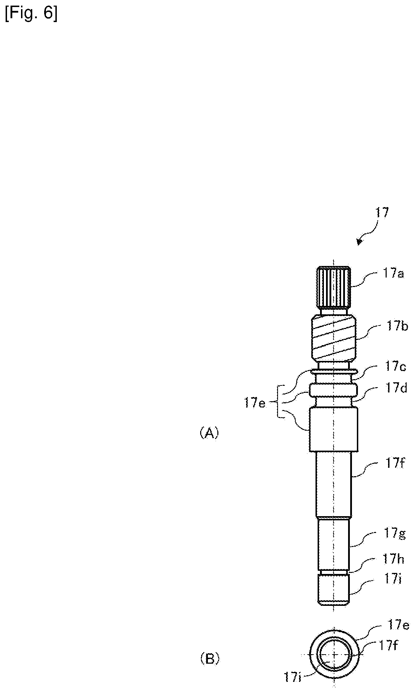

Fig. 6 shows (A) a side view and (B) a bottom view seen from below of the needle 17. As shown in Fig. 6, in the needle 17 there are formed, in order from above in a side view, each in a cylindrical shape with a different diameter, a gear section 17a, a male thread section 17b, a first needle recess 17c, a second needle recess 17d, a needle main body 17e, a cylinder attachment section 17f, a cap sliding section 17g, a third needle recess 17h, and a lower end support section 17i. The gear section 17a engages with a gear (not shown) inside the motor mechanism 10, whereby the needle 17 is controlled to rotate by the motor mechanism 10. The male thread section 17b engages the female thread of the needle nut 18 as described above, whereby the needle 17 itself moves up and down by the rotation of the needle 17. O-rings 30, 31 are fitted into the first needle recess 17c and the second needle recess 17d to maintain a sealed state between the needle 17 and the needle nut 18. The cylinder attachment section 17f secures the cylinder 20 by being inserted therein. The cap sliding section 17g is inserted into the cap 22. A stopping plate 27 is mounted in the third needle recess 17h to restrict downward movement of the cap 22 into which the needle 17 is inserted.

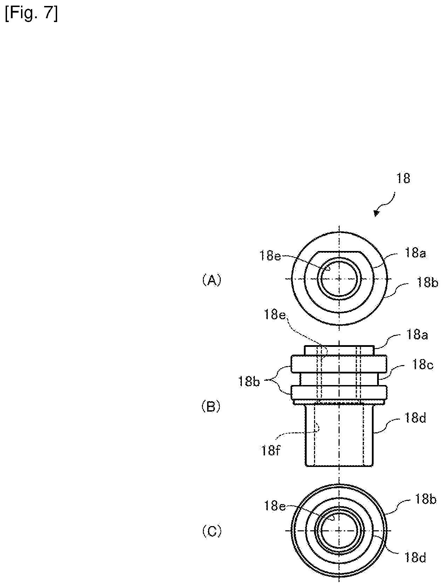

Fig. 7 shows (A) a top view seen from above, (B) a side view (transparent view), and (C) a bottom view seen from below of the needle nut 18. As shown in Fig. 7, in the needle nut 18 there are formed, in order from above in a side view, a needle nut mounting section 18a, a needle nut main body 18b, a needle nut recess 18c, and a needle nut lower tube section 18d. The needle nut recess 18c is provided at a central portion of the needle nut main body 18b. Apart from the needle nut mounting section 18a, all of these sections are formed in a cylindrical shape. As shown in the top view of Fig. 7 (A), the needle nut mounting section 18a is of a shape in which part of a cylinder is cut flat, and the needle nut 18 is mounted to the upper lid 9 by inserting the needle nut mounting section 18a into a mounting hole (not shown) formed in the upper lid 9 to fit the needle nut mounting section 18a. Thus, in a state where the needle nut 18 is mounted to the upper lid 9, rotary motion of the needle nut 18 is restricted. Further, the needle nut 18 is provided with cylindrical needle nut openings 18e, 18f with different opening diameters, which run through the needle nut 18 along its central axis in a vertical direction. Around an inner peripheral surface of the needle nut opening 18e is formed a female thread to engage with the male thread of the male thread section 17b of the needle 17. An internal diameter of the needle nut opening 18f is slightly bigger than an outer diameter of the needle main body 17e, so that when the needle 17 moves up and down, the needle main body 17e slides within the needle nut opening 18f. An O-ring 28 is fitted into the needle nut recess 18c to maintain a sealed state between the needle nut 18 and the cylinder guide 19.

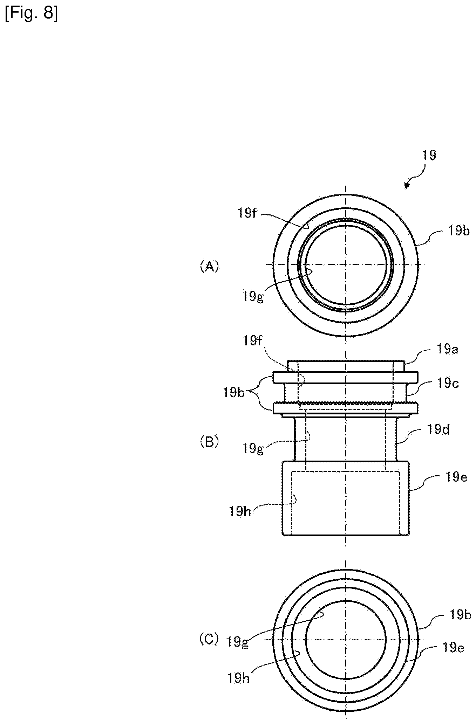

Fig. 8 shows (A) a top view seen from above, (B) a side view (transparent view), and (C) a bottom view seen from below of the cylinder guide 19. As shown in Fig. 8, in the cylinder guide 19 there are formed, in order from above in a side view, each in a cylindrical shape with a different diameter, a cylinder guide mounting section 19a, a cylinder guide main body 19b, a cylinder guide recess 19c, a cylinder guide middle tube section 19d, and a cylinder guide lower tube section 19e. The cylinder guide recess 19c is provided at a central portion of the cylinder guide main body 19b. Further, the cylinder guide 19 is provided with cylindrical cylinder guide openings 19f, 19g, 19h with different opening diameters, which run through the cylinder guide 19 along its central axis in a vertical direction. The cylinder guide opening 19f is formed to house the needle nut main body 18b, and when the needle nut 18 is housed within the cylinder guide 19, the O-ring 28 fit into the needle guide recess 18c maintains a sealed state between the needle nut 18 and the cylinder guide 19, as described above.

An outer diameter of the cylinder guide main body 19b is slightly smaller than an inner diameter of the upper opening 11, so that an O-ring 29 fit into the cylinder guide recess 19c maintains a sealed state between the cylinder guide 19 and an inner peripheral surface of the valve casing 2. Further, since an edge at a lower end of the cylinder guide main body 19b abuts the upper opening edge 11a, when the cylinder guide 19 is mounted in the valve casing 2, downward movement of the cylinder guide 19 is restricted. Thus, the cylinder guide 19 is held within the upper opening 11 of the valve chamber 8 in a state of housing the needle nut 18. An opening diameter of the cylinder guide opening 19h is set to be slightly bigger than an outer diameter of a cylinder main body 20a of the cylinder 20 to such a degree that the cylinder 20 described below is able to slide in a vertical direction.

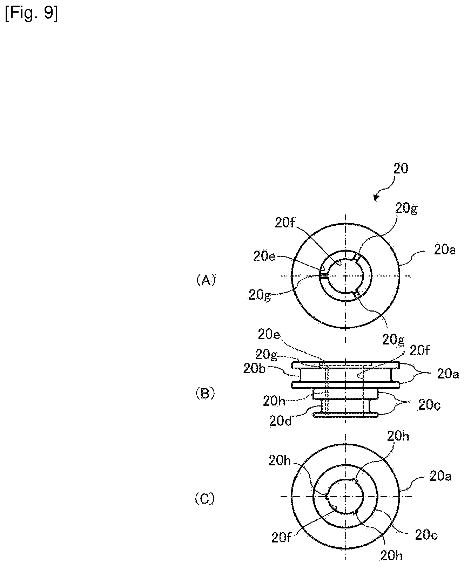

Fig. 9 shows (A) a top view seen from above, (B) a side view (transparent view), and (C) a bottom view seen from below of the cylinder 20. As shown in Fig. 9, in the cylinder 20 there are formed, in order from above in a side view, each in a cylindrical shape with a different diameter, a cylinder main body 20a, a first cylinder recess 20b, a cylinder lower section 20c, and a second cylinder recess 20d. The first cylinder recess 20b is provided at a central portion of the cylinder main body 20a, and the second cylinder recess 20d is provided at a low position of the cylinder lower section 20c. Further, the cylinder 20 is provided with cylindrical cylinder openings 20e, 20f with different opening diameters, which run through the cylinder 20 along its central axis in a vertical direction. Further, in an inner peripheral surface of the cylinder opening 20f there are formed first cylinder grooves 20g that extend outwardly at an upper end portion thereof to an inner peripheral surface of the cylinder opening 20e, and first cylinder grooves 20h that communicate with the first cylinder grooves 20g and extend downwardly along the inner peripheral surface of the cylinder opening 20f to a lower end surface of the cylinder 20. In the present embodiment, as shown in Fig. 9, first communicating grooves 23 consisting of the first cylinder grooves 20g and the first cylinder grooves 20h are formed at three locations at approximately equal intervals in the inner surface of the cylinder opening 20f.

The cylinder openings 20e, 20f are respectively formed so that the inner diameter of the cylinder opening 20e fits the outer diameter of the needle main body 17e and the inner diameter of the cylinder opening 20f fits the outer diameter of the cylinder attachment section 17f of the needle 17, and the cylinder 20 is attached to the needle 17 in a state of having the needle 17 inserted therein. In addition, O-rings 32, 33 are respectively fitted into the first cylinder recess 20b and the second cylinder recess 20d to maintain a sealed state respectively between the cylinder 20 and the cylinder guide 19 and between the cylinder 20 and the cap 22.

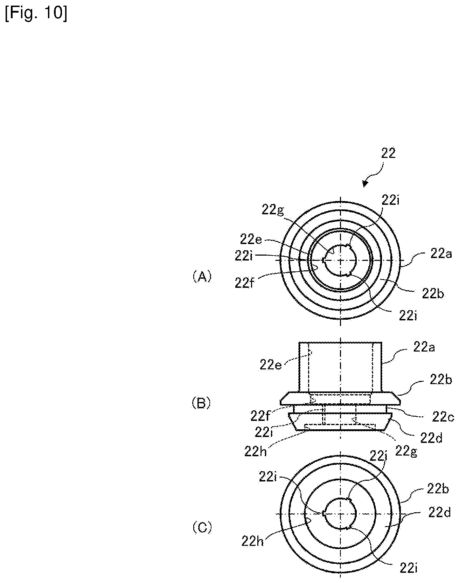

Fig. 10 shows (A) a top view seen from above, (B) a side view (transparent view), and (C) a bottom view seen from below of the cap 22. As shown in Fig. 10, in the cap 22 there are formed, in order from above in a side view, a cylindrical cap main body 22a, an upper flange 22b of a truncated cone shape that expands outwardly toward the bottom, a cylindrical cap recess 22c, and a lower flange 22d of a truncated cone shape that narrows inwardly toward the bottom. Fitted into the cap recess 22c is a ring-shaped seating packing 15 formed as an elastic member that is seated on the valve seat 14 when the flow control valve 1 is closed.

Further, the cap 22 is provided with cylindrical cap openings 22e, 22f, 22g, 22h with different opening diameters, which run through the cap 20 along its central axis in a vertical direction. An inner diameter of the cap opening 22e is slightly bigger than an outer diameter of the cylinder lower section 20c, so that the cylinder lower section 20c is able to slide in a vertical direction within the cap opening 22e. An inner diameter of the cap opening 22f is slightly smaller than the inner diameter of the cap opening 22e, and is provided with the spring 21 that biases the cap 22 relative to the cylinder 20. An inner diameter of the cap opening 22g is slightly bigger than an outer diameter of the cap sliding section 17g of the needle 17, so that the cap sliding section 17g of the needle 17 is able to slide in a vertical direction within the cap opening 22g. Further, in an inner surface of the cap opening 22g there are formed cap grooves 22i that extend in a vertical direction and constitute second communicating grooves 24. In the present embodiment, the second communicating grooves 24 (cap grooves 22i), like the first communicating grooves 23, are formed at three locations at approximately equal intervals in the inner surface of the cap opening 22g.

Since the cylinder 20 as described above is attached to the needle 17, and the cap 22 is attached to the cylinder 20 via the spring 21, the cylinder 20 and the cap 22 move up and down as one together with the needle 17, and since the flow control valve 1 opens and closes due to the seating packing 15 mounted in the cap 22, the cylinder 20 and the cap 22 act together as a valve body 25 of the flow control valve 1.

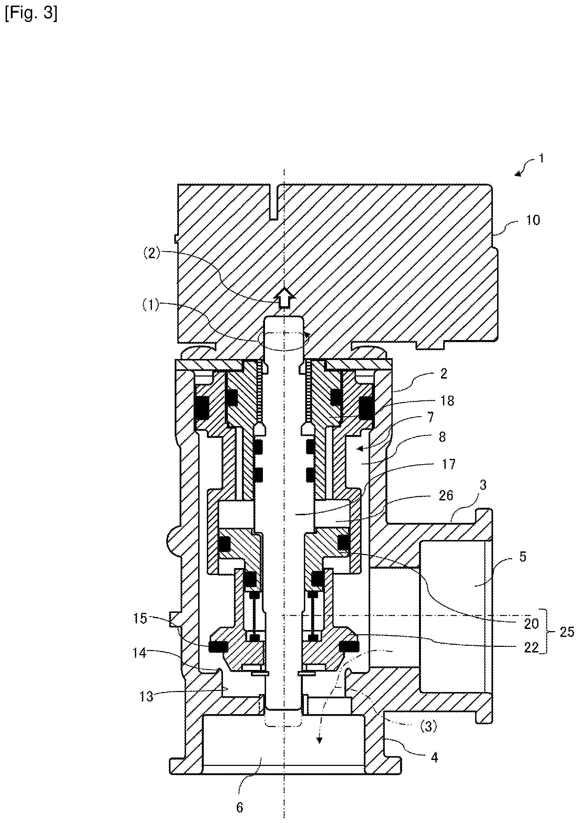

Next, the operation and effect of the valve mechanism 7 of the flow control valve according to the present invention configured as described above will be described. As mentioned above, Fig. 1 is a cross-sectional view of the flow control valve 1 when the valve is closed, and Fig. 3 is a cross-sectional view of the flow control valve 1 when the valve is open.

When closing the flow control valve 1, the motor mechanism 10 rotates the needle 17 as indicated by arrow (1) in Fig. 1. The needle 17 moves downwardly as it rotates due to the needle nut 18 secured in the valve chamber 8 as described above, which also causes the valve body 25 consisting of the cylinder 20 and the cap 22 to move downwardly as it rotates, so that, as shown in Fig. 1, the seating packing 15 of the valve body 25 is seated on the valve seat 14, whereby the flow control valve 1 closes. When opening the flow control valve 1, as shown by arrows (1) and (2) in Fig. 3, the needle 17 is rotated by the motor mechanism 10 in the opposite direction to when the valve closes to move upwardly, which also causes the valve body 25 consisting of the cylinder 20 and the cap 22 to move upwardly, so that, as shown in Fig. 3, the seating packing 15 of the valve body 25 separates from the valve seat 14, whereby the flow control valve 1 opens. As shown by arrow (3) in Fig. 3, fluid flows from the primary chamber 5 into the secondary chamber 6. By using the motor mechanism 10 to seat the seating packing 15 of the valve body 25 on the valve seat 14, or modify the degree of opening between the seating packing 15 of the valve body 25 and the valve seat 14 when opening the valve, the flow control valve 1 can control the flow rate of fluid flowing from the primary chamber 5 to the secondary chamber 6. In addition, since the valve body 25 is composed of the cylinder 20 and the cap 22 (including the seating packing 15) via the spring 21, the spring 21 acts as a buffer in the event that the needle 17 is rotated too far when closing the flow control valve 1, which can prevent damage to components due to excessive rotation of the needle 17.

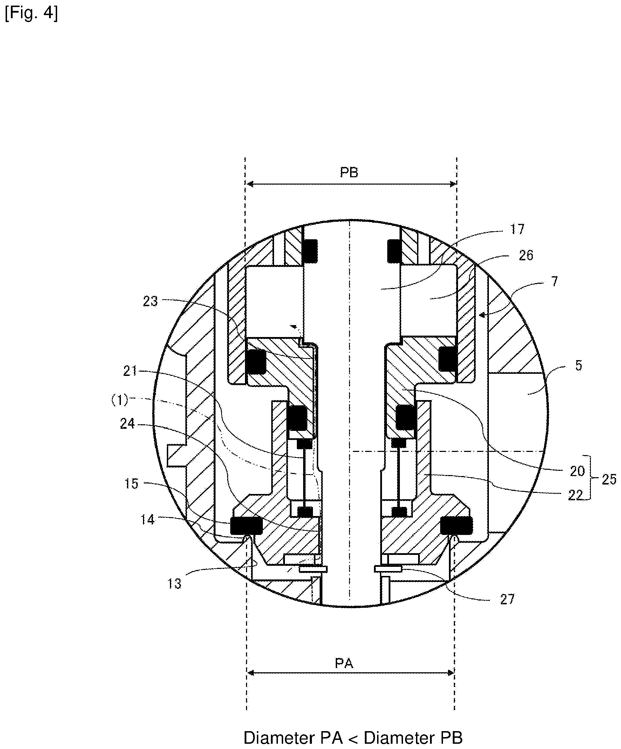

Fig. 4 is a cross-sectional view that magnifies a portion of the valve body 25 (cylinder 20 and cap 22) of the flow control valve 1. As described above, the cylinder 20 is provided with first communicating grooves 23 that run in a vertical direction of the cylinder 20, and the cap 22 is provided with second communicating grooves 24 that run in a vertical direction of the cap 22. Therefore, a pressure-receiving chamber 26 surrounded by the upper surface of the valve body 25 (the upper surface of the cylinder 20) and the cylinder guide opening 19h of the cylinder guide 19 is in communication with the secondary chamber 6 via the first communicating grooves 23 and the second communicating grooves 24. Because of this, as indicated by arrow (1) in Fig. 4, fluid flows from the secondary chamber 6 into the pressure-receiving chamber 26, so that the pressure in the pressure-receiving chamber 26 becomes approximately equal to the pressure in the secondary chamber 6. In other words, the pressure in the pressure-receiving chamber 26 becomes approximately equal to a secondary side pressure.

In the flow control valve 1 according to the present invention, as shown in Fig. 4, a diameter PB of the upper surface of the valve body 25 is set to be slightly bigger than a diameter PA of the lower surface of the valve body 25. Therefore, the valve body 25 will always be in a state in which a slight force is applied upwardly (in a valve opening direction). (This is a state in which the valve body 25 is raised toward the upper surface side). Thus, it is possible to reduce backlash occurring in the motor mechanism 10 when the valve body 25 moves up or down. This allows for the valve body 25 to be moved up and down smoothly.

In addition, by reducing backlash in the motor mechanism 10 to a required degree by means of the difference between the area (diameter PB) of the upper surface of the valve body 25 and the area (diameter PA) of the lower surface of the valve body 25, the difference in pressure applied to the upper surface and the lower surface of the valve body 25 can be reduced. This makes it possible to reduce the activation torque needed to activate the motor mechanism 10 when the valve body 25 is to be moved up or down.

In this way, the flow control valve 1 according to the present invention allows for smooth upward and downward movement of the valve body 25, which facilitates control of the flow rate of the fluid, and allows for miniaturization of the motor in the motor mechanism 10 due to the reduced activation torque of the motor, and thus makes it possible to provide a flow control valve capable of efficient flow control at a low cost.

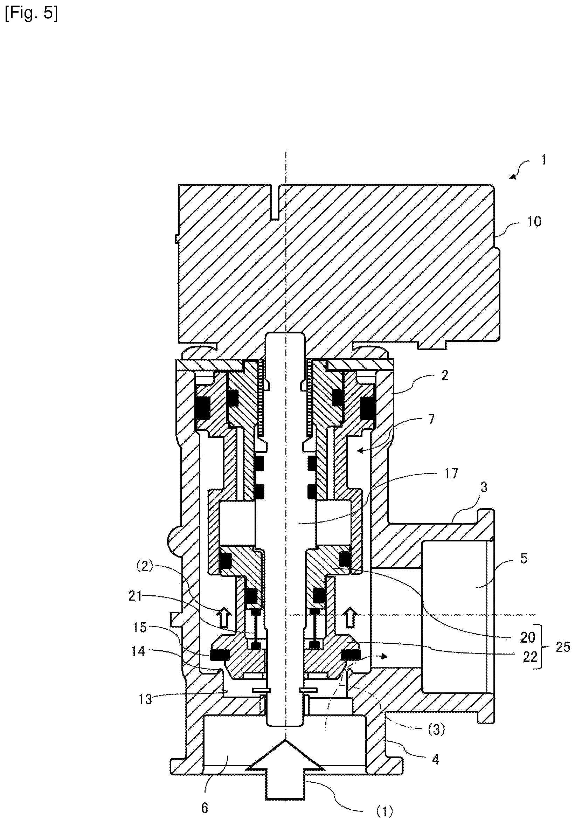

Next, a case in which the secondary side connected to the secondary chamber 6 experiences an abnormal rise in pressure due to water hammer, etc. while the flow control valve 1 is closed will be described with reference to Fig. 5. Fig. 5 is a cross-sectional view describing a pressure relief mechanism at a time of rising pressure on the secondary side in the flow control valve 1 according to the present invention.

When an abnormal rise in pressure due to water hammer etc. occurs in the secondary side connected to the secondary chamber 6 as indicated by arrow (1) in Fig. 5 while the flow control valve 1 is closed, then, in the valve body 25, the cap 22 will move upward against the biasing force of the spring 21, as indicated by arrow (2) in Fig. 5. This causes the seating packing 15 of the valve body 25 to separate from the valve seat 14, allowing for the pressure of the secondary side to escape into the primary chamber 5 which is the primary side, as indicated by arrow (3) in Fig. 5, thus preventing damage to the components of the secondary side, etc. In other words, by constituting the valve body 25 from the cylinder 20 and the cap 22 and having the cap 22 be attached to the cylinder 20 by the spring 21, a pressure relief mechanism for when an abnormal rise in pressure occurs on the secondary side can easily be configured. In addition, as described above, the valve body 25 according to the present embodiment also successfully prevents damage to components due to excessive rotation of the needle 17 when closing the valve.

Here, the primary chamber 5 is an example of a primary chamber, the secondary chamber 6 is an example of a secondary chamber, the valve casing 2 is an example of a valve casing, the valve seat 14 is an example of a valve seat, the valve body 25 is an example of a valve body, the needle 17 is an example of a plunger, the motor mechanism 10 is an example of a drive unit, the pressure-receiving chamber 26 is an example of a pressure-receiving chamber, conductive pathways consisting of the first communicating grooves 23 and the second communicating grooves 24 are examples conductive pathways, the cylinder 20 is an example of an upper valve body, the cap 22 is an example of a lower valve body, and the spring 21 is an example of a biasing member.

An embodiment of the present invention has been described in detail above, but this is merely an example, and it should be understood that the present invention is not to be interpreted as equivalent to or limited by the specific descriptions in the above embodiment, but that it may be practiced in aspects to which various modifications, alterations, etc. based on the knowledge of a person skilled in the art have been added, and that such aspects, so long as they do not deviate from the spirit and scope of the present invention, all fall within the scope of the present invention.

For example, in the above embodiment, the valve body 25 is composed of the cylinder 20 and the cap 22, but in a case where a separate pressure relief valve or the like is provided to the secondary side and there is no need to provide a pressure relief function to the valve body 25 as described above, the valve body 25 may be of a one-piece construction. This allows for a lower number of components, which may reduce production costs.

Further, in the above embodiment, the needle 17 is rotated by the motor mechanism 10 to cause the valve body 25 to move up or down together with the needle 17 to control the flow rate of the fluid, but the motor mechanism 10 may instead rotate the needle nut 18 to move the needle 17 up or down. In this case, since the needle 17 does not rotate, the valve body 25 can also be moved up or down without rotating. Thus, since the valve body 25 does not rotate in the fluid, the flow of fluid from the primary chamber 5 to the secondary chamber 6 can be stabilized. In addition, since wear on the O-rings fitted into the valve body 25 and the seating packing 15 can be reduced, this also improves maintainability.

Further, in the above embodiment, the conductive pathways consisting of the first communicating grooves 23 and the second communicating grooves 24 are provided at three locations, but the conductive pathways are not so limited, and may be provided at one location, or at four or more locations, so long as the pressure in the pressure-receiving chamber 26 becomes approximately equal to the secondary side pressure. Further, if it is possible to provide conductive pathways inside the needle 17, then conductive pathways may be provided inside the needle 17.

Further, in the above embodiment, a needle support 16 is provided, but depending on the shape of the needle 17, this may not be necessary.

### Description of the Reference Numerals

- 1: Flow control valve
- 2: Valve casing
- 5: Primary chamber
- 6: Secondary chamber
- 7: Valve mechanism
- 8: Valve chamber
- 10: Motor mechanism
- 14: Valve seat
- 15: Seating packing
- 17: Needle
- 18: Needle nut
- 19: Cylinder guide
- 20: Cylinder
- 22: Cap
- 23: First communicating groove
- 24: Second communicating groove
- 25: Valve body
- 26: Pressure-receiving chamber

## Claims

1. A flow control valve comprising:
a valve casing having a primary chamber that is an inlet section and a secondary chamber that is an outlet section;
a valve seat provided inside the valve casing;
a valve body that can be seated on the valve seat;
a plunger that is continuous with the valve body;
a drive unit configured to move the plunger along an axial direction of the plunger to switch between a closed state in which the valve body is seated on the valve seat and an open state in which the valve body is withdrawn from the valve seat;
a pressure-receiving chamber provided between an upper surface of the valve body and the drive unit; and
a conductive pathway, provided along the axial direction of the plunger, that causes the secondary chamber and the pressure-receiving chamber to communicate,
wherein the upper surface of the valve body that constitutes a lower surface of the pressure-receiving chamber has an area that is bigger than an area of a lower surface of the valve body that constitutes an upper surface of the secondary chamber.

2. The flow control valve according to Claim 1, wherein the valve body is composed of:
an upper valve body, an upper surface of which constitutes the lower surface of the pressure-receiving chamber; and
a lower valve body, a lower surface of which constitutes the upper surface of the secondary chamber,
the flow control valve further comprising a biasing member between the upper valve body and the lower valve body that biases the upper and lower valve bodies away from each other.
